# FASCICULE DE BREVET EUROPEEN

(11) **EP 2 605 496 B1**
(45) Date de publication et mention de la délivrance du brevet: **08.04.2020**
(21) Numéro de dépôt: 12169781.7
(22) Date de dépôt: 29.05.2012
(51) Int. Cl.: H04M 1/725, G06F 21/62, H04W 12/08, H04W 88/02

(54) **Restriction d'accès aux ressources d'un terminal**
Zugriffsbeschränkung auf die Ressourcen eines Endgeräts
Access restriction to the resources of a terminal

(30) Priorité: 12.12.2011 FR 1161459
(43) Date de publication de la demande: 19.06.2013
(73) Titulaire: IDEMIA France, 92700 Colombes (FR)
(72) Inventeur: Dischamp, Paul, 92000 Nanterre (FR)
(74) Mandataire: Cabinet Beau de Loménie

(56) Documents cités:
- US-A1- 2008 020 803
- US-A1- 2009 311 991

## Description

### Arrière-plan de l'invention

L'invention se rapporte au domaine des terminaux de communication mobiles. Elle concerne en particulier le contrôle de l'accès aux applications et aux données d'un terminal informatique portable, par exemple un téléphone portable.

Les terminaux mobiles, tels que les téléphones multifonctions ou les tablettes numériques, disposent de plusieurs ressources de communication permettant d'accéder par exemple à un réseau de téléphonie, un réseau Internet, un réseau GPS, une interface de communication NFC (pour « *Near Field Communication* »), WIFI, Bluetooth, etc.

Ces ressources de communication sont complétées par des applications logicielles pour exploiter ces services. Certaines de ces applications mémorisent des données personnelles de l'utilisateur telles que des photos, des messages, des données d'identification de connexion, des données bancaires, etc. Ces données sont critiques et demandent d'être sécurisée.

Pour cela, les téléphones mobiles sont protégés par un code personnel, dit également code PIN. Le code PIN permet de vérifier l'identité de l'utilisateur et également de bloquer certaines fonctions, comme l'authentification au réseau téléphonique. Sans ce code PIN, il n'est pas possible d'utiliser le téléphone.

Par contre, une fois le code PIN saisi, le téléphone donne accès à toutes les informations personnelles. Or, il arrive qu'un proche demande à l'utilisateur de lui prêter son téléphone pour utiliser une ressource particulière, par exemple l'accès à Internet lorsque ce proche ne dispose pas d'un accès à Internet sur son propre téléphone mobile, ou lorsqu'il ne dispose pas de téléphone. Dans certain cas, l'utilisateur peut prêter son téléphone à un individu qui ne fait pas partie de son entourage proche ou il peut souhaiter cacher certaines informations (messages par exemple) strictement personnelles.

Avec les terminaux actuels, ceci est problématique car en prêtant son téléphone, l'utilisateur donne accès à toutes ses données personnelles. De plus, si la personne empruntant le téléphone souhaite utiliser une application nécessitant un identifiant et un mot de passe, l'utilisateur doit effacer ses données d'identification des champs de saisie pour permettre à cette personne de se connecter. Une fois son téléphone récupéré, l'utilisateur doit une nouvelle fois saisir ses identifiants sur son téléphone.

Dans le domaine des ordinateurs personnels, on connaît l'utilisation d'un système d'exploitation multisession, où chaque session est associée à un utilisateur disposant de droits d'accès prédéfinis et de données personnelles. Toutefois, l'utilisation d'un mécanisme multisession alourdit le système d'exploitation et nécessite de définir les droits d'accès préalablement. De plus, le changement d'une session à l'autre implique généralement plusieurs manipulations complexes. Ainsi, un tel mécanisme multisession n'est pas approprié pour une situation courte et exceptionnelle comme le prêt d'un téléphone.

Le document US 2007/0204224 décrit un téléphone portable dans lequel la mémoire est divisée entre une partie privée et une partie publique. L'accès aux données de la partie privée nécessite l'introduction d'un mot de passe. Ici également, il est nécessaire de définir au préalable quelles données sont privées et publiques. Cette solution offre donc peu de souplesse dans la configuration des droits d'accès. De plus, une même données ne peut pas faire l'objet d'une exploitation privée et publique, en fonction de la situation. La solution proposée par ce document n'est donc pas non plus appropriée pour une situation courte et exceptionnelle comme le prêt d'un téléphone.

US2009/0311991 divulgue une méthode de protection des informations personnelles contenues dans un terminal mobile.

US2008/0020803 divulgue une méthode de restriction d'accès à une fonction d'un terminal mobile.

### Objet et résumé de l'invention

La présente invention a été réalisée en considération des problèmes précités de l'art antérieur.

Ainsi, la présente invention propose un terminal informatique portable comprenant un système d'exploitation configuré pour commuter d'un premier état vers un deuxième état en réponse à une première commande d'un utilisateur et pour commuter du deuxième état vers le premier état en réponse à une deuxième commande de l'utilisateur, la deuxième commande incluant l'introduction d'un code d'identification de l'utilisateur, le système d'exploitation étant capable, dans le premier état, de commander l'exécution de manière interactive d'une application sélectionnée dans un ensemble d'applications, le système d'exploitation étant capable, dans le deuxième état, de commander l'exécution de manière interactive d'une application dudit ensemble d'applications conformément à une condition d'accès, caractérisé en ce que ladite condition d'accès est déterminée en fonction de ladite première commande.

Corrélativement, l'invention propose un procédé de fonctionnement d'un système d'exploitation d'un terminal informatique portable, comprenant
- dans un premier état, une étape de commande de l'exécution de manière interactive d'une application sélectionnée dans un ensemble d'applications,
- une étape de commutation du premier état vers un deuxième état en réponse à une première commande d'un utilisateur,
- dans le deuxième état, une étape de commande de l'exécution de manière interactive d'une application dudit ensemble d'applications conformément à une condition d'accès,
- une étape de commutation du deuxième état vers le premier état en réponse à une deuxième commande de l'utilisateur, la deuxième commande incluant l'introduction d'un code d'identification de l'utilisateur, caractérisé en ce que ladite condition d'accès est déterminée en fonction de ladite première commande.

L'utilisateur qui dispose du code d'identification peut donc utiliser le terminal dans le premier état et exécuter une quelconque application. Lorsqu'il désire prêter son terminal, l'utilisateur peut commander la commutation vers le deuxième état. Dans ce deuxième état, la personne qui emprunte le terminal ne peut exécuter une ou des applications que conformément à la condition d'accès. L'exécution d'applications auxquelles l'utilisateur ne souhaite pas donner accès est donc protégée. De plus, comme la condition d'accès est déterminée en fonction de la commande de commutation vers le deuxième état, il n'est pas nécessaire de définir des droits d'accès au préalable. Au contraire, le choix des applications auxquelles l'utilisateur donne accès se fait simplement et rapidement au moment de commuter vers le deuxième état. Le terminal conforme à l'invention peut donc facilement être prêté sans donner accès à toutes ses applications.

La condition d'accès peut définir un sous-ensemble dudit ensemble d'applications dont le système d'exploitation peut commander l'exécution de manière interactive dans le deuxième état.

La première commande peut comprendre une commande d'affichage d'une liste d'application, et une commande de sélection d'au moins une application dans ladite liste, ledit sous-ensemble comprenant ladite au moins une application sélectionnée.

La première commande peut comprendre une commande d'exécution d'une application, l'exécution de l'application comprenant la transmission, vers le système d'exploitation, d'une demande de passage dans le deuxième état en réponse à l'actionnement d'un élément prédéterminé de l'application, ledit sous-ensemble comprenant ladite application.

La condition d'accès peut définir un nombre d'exécutions d'applications de manière interactive que le système d'exploitation peut commander dans le deuxième état.

Le code d'identification peut comprendre notamment un code PIN, une lecture biométrique ou un code tactile.

Selon un mode de réalisation, dans le premier état, l'application exécutée de manière interactive a accès à un ensemble de données et, dans le deuxième état, l'application exécutée de manière interactive a accès à un sous-ensemble de l'ensemble de données, ledit sous-ensemble de l'ensemble de données étant déterminé en fonction de la première commande.

Selon un mode de réalisation, dans le deuxième état, le système d'exploitation est apte à commander l'exécution de manière non-interactive d'une application n'appartenant pas audit sous-ensemble dudit ensemble d'applications.

Selon un mode de réalisation, la commande d'utilisation restreinte comprend une limite d'utilisation, le système d'exploitation étant configuré pour exécuter de manière interactive, dans le deuxième état, l'application sélectionnée conformément à ladite limite d'utilisation.

Selon un mode de réalisation, en réponse à une commande de passage en mode veille, le système d'exploitation est configuré pour commuter du premier état vers un état de veille verrouillée ou du deuxième état vers un état de veille non verrouillée, la commutation de l'état de veille verrouillée vers le premier état nécessitant l'introduction du code d'identification de l'utilisateur.

Selon un mode de réalisation, dans le deuxième état, le système d'exploitation commande l'exécution de manière interactive d'une application choisie parmi : un navigateur Internet, une application d'appel téléphonique.

Selon un mode de réalisation, dans le deuxième état, le système d'exploitation commande l'exécution de manière non-interactive d'une application choisie parmi : une application dont l'exécution nécessite une communication courte distance, par exemple de type NFC, une application bancaire, une application de titre de transport.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un terminal informatique portable selon un mode de réalisation de l'invention,
- la figure 2 est un diagramme d'état du système d'exploitation du terminal de la figure 1, et
- la figure 3 représente un exemple d'affichage permettant une commutation d'état dans le terminal de la figure 1.

### Description détaillée de modes de réalisation

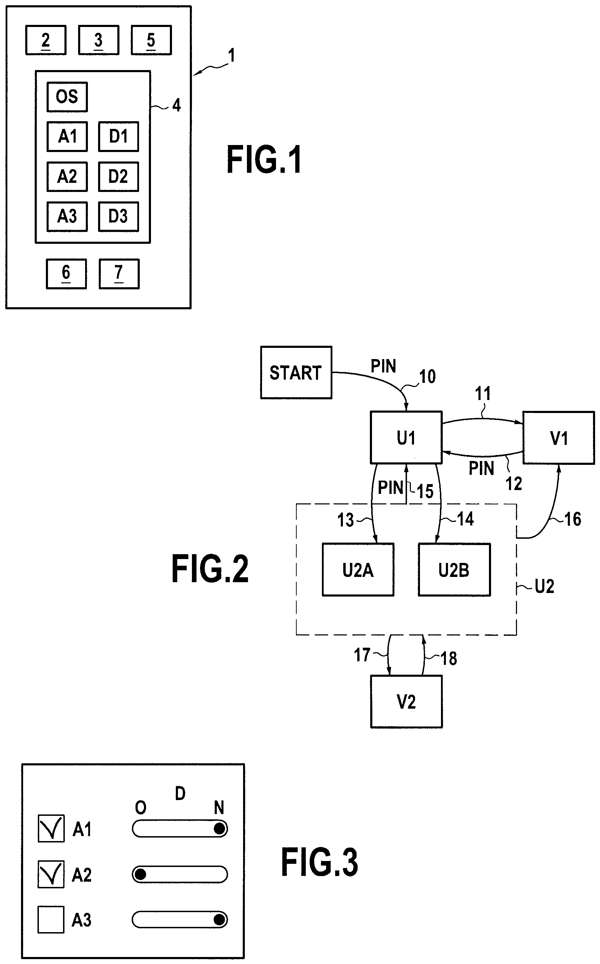

La **figure 1** représente un terminal 1 informatique portable, qui peut être par exemple un téléphone multifonction ou une tablette numérique.

Le terminal 1 présente l'architecture matérielle d'un ordinateur et comprend notamment un processeur 2, une mémoire volatile 3, une mémoire non-volatile 4 et une interface utilisateur 5. Le processeur 2 permet l'exécution d'instructions de programmes d'ordinateur mémorisés dans la mémoire non-volatile 4, en utilisant la mémoire volatile 3. La mémoire non-volatile 4 peut comprendre un support de mémoire intégré au terminal 1 de manière inamovible et/ou de manière amovible.

Le terminal 1 comprend également plusieurs interfaces de communication. Sur la figure 1, on a représenté une interface de communication 6 permettant de communiquer sur un réseau de téléphonie et une interface de communication 7 permettant de communiquer sur un réseau de transfert de données. Bien entendu, le terminal 1 peut comprendre plus de deux interfaces de communication, de différents types par exemple des interfaces de communication courte distante (NFC, Bluetooth) de l'ordre de quelques centimètres à quelques dizaines de centimètres pour des applications sécurisée de paiement, transport etc..., ou de communication plus longue distance jusqu'à quelques centaines de mètres de type WIFI.

La mémoire non-volatile 4 mémorise plusieurs programmes d'ordinateur, notamment un système d'exploitation OS et une pluralité d'applications. La mémoire non-volatile 4 mémorise également des données. Sur la figure 1, on a représenté trois applications A1, A2 et A3 et des données D1, D2, D3. Bien entendu, le nombre d'applications et le nombre de données peuvent être plus élevés.

Le système d'exploitation OS permet de commander l'exécution d'applications, par exemple en réponse à une commande de l'utilisateur.

Dans un mode de réalisation, le système d'exploitation OS est multitâche, ce qui signifie que plusieurs applications peuvent être exécutées en même temps. Dans ce cas, une application est exécutée en premier plan alors qu'au moins une autre application est exécutée en arrière-plan. L'application exécutée en premier plan est exécutée de manière interactive, alors que la ou les applications exécutées en arrière-plan sont exécutée de manière non-interactive. Une application exécutée de manière interactive réagit aux nouvelles commandes. Par exemple, l'utilisateur peut introduire des commandes pour l'application par l'interface utilisateur 5, et l'application réagit à ces commandes. Selon un autre exemple, un message reçu par l'interface de communication 6 ou 7 peut contenir une commande et l'application exécutée en premier plan réagit à cette commande. Au contraire, les applications exécutées en arrière-plan ne réagissent pas aux nouvelles commandes introduites par l'utilisateur ou reçues dans des messages. En réponse à une commande particulière de l'utilisateur, système d'exploitation OS peut changer l'application qui est exécutée au premier plan.

L'exécution d'une application peut impliquer l'accès à des ressources du terminal 1, par exemple à une des interfaces de communication, et à des données. Par exemple, l'application A1 est une application de téléphonie et les données D1 incluent une liste de contacts avec des numéros de téléphone. L'exécution de l'application D1 implique l'accès à l'interface de communication 6 et l'accès aux données D1. De même, l'application A2 est par exemple un navigateur Internet et les données D2 incluent des données de connexion à un site Internet (identifiant, mot de passe). L'exécution de l'application A2 implique l'accès à l'interface de communication 7 et l'accès aux données D2. Par exemple également, l'application A3 est une application de paiement sans contact et les données D3 incluent des données bancaires. L'exécution de l'application A3 implique l'accès aux données D3 et à l'interface de communication 6.

La **figure 2** représente un diagramme d'état illustrant le fonctionnement du système d'exploitation OS.

Le système d'exploitation OS présente plusieurs états : un état START de départ, un état U1 d'utilisation normale, un état U2 d'utilisation restreinte, un état V1 de veille verrouillée et un état V2 de veille non verrouillée.

Après le démarrage du terminal 1, le système d'exploitation OS se trouve dans l'état START. Dans cet état, le terminal 1 demande à l'utilisateur d'introduire un code d'identification. Le code d'identification est par exemple un code PIN, une lecture biométrique, un code tactile, etc. Si l'utilisateur introduit un code d'identification correcte, le système d'exploitation passe dans l'état U1 (flèche 10). Dans le cas d'un terminal mobile destiné à communiquer sur un réseau de communication, le code d'identification peut être un code prédéterminé dans un microcircuit sécurisé du terminal, par exemple le code PIN d'une carte SIM. Une fonction du code PIN de la carte SIM peut être le déblocage de fonctions intervenant lors de la phase d'authentification de l'abonné auprès du réseau de télécommunication (exécution des algorithmes cryptographiques lors de l'authentification, réponse carte SIM etc...). Alternativement ou en complément, la saisie d'un deuxième code d'identification mémorisé dans une mémoire du terminal peut être nécessaire pour que le système d'exploitation passe dans l'état U1, ce code permet de vérifier l'identité du propriétaire du téléphone.

L'état U1 d'utilisation normale permet à l'utilisateur d'accéder à toutes les ressources du terminal 1, notamment toutes les applications A1 à A3 et toutes les données D1 à D3. Ainsi, en réponse à une commande d'exécution de l'application A1, introduite par l'utilisateur sur l'interface utilisateur 5, le système d'exploitation OS commande l'exécution de l'application A1 avec accès aux données D1, ce qui permet à l'utilisateur de passer un appel téléphonique en utilisant un numéro de téléphone de sa liste de contacts. De manière similaire, en réponse à une commande d'exécution de l'application A2, le système d'exploitation OS commande l'exécution de l'application A2 avec accès aux données D2, ce qui permet à l'utilisateur d'accéder à un site Internet sur lequel il est inscrit sans avoir à saisir ses données de connexion. De manière correspondante, en réponse à une commande d'exécution de l'application A3, le système d'exploitation OS commande l'exécution de l'application A3 avec accès aux données D3, ce qui permet à l'utilisateur d'effectuer un paiement sans contact.

Dans l'état U1, en réponse à une commande de passage en mode veille, le système d'exploitation OS passe dans l'état V1 de veille verrouillé (flèche 11). La commande de passage en mode veille peut par exemple être introduite par l'utilisateur (bouton de l'interface utilisateur 5) ou générée par un minuteur. Dans l'état V1, le système d'exploitation OS économise les ressources du terminal 1, par exemple il éteint l'écran de l'interface utilisateur 5 pour économiser la batterie. Pour repasser dans l'état U1 à partir de l'état V1, l'utilisateur doit introduire une commande incluant l'introduction de son code d'identification (flèche 12).

Dans l'état U1, en réponse à une commande d'utilisation restreinte, le système d'exploitation OS passe dans l'état U2 d'utilisation restreinte (flèches 13, 14).

Dans un premier mode de réalisation, l'état U2 permet l'accès à uniquement certaines ressources du terminal 1. Plus précisément, le système d'exploitation OS est configuré pour commander l'exécution uniquement de certaines des applications A1 à A3 et permettre l'accès uniquement à certaines des données D1 à D3. Dans le cas d'un système d'exploitation OS multitâche, le système d'exploitation OS est configuré pour commander l'exécution en premier plan (c'est-à-dire de manière interactive) uniquement de certaines des applications A1 à A3. Dans un mode de réalisation, l'exécution d'autres applications peut toutefois se poursuivre en arrière-plan (donc sans interaction possible avec l'utilisateur) si elle avait déjà été démarrée dans l'état U1. Les applications qu'il est possible d'exécuter (ou d'exécuter en premier plan dans le cas d'un système d'exploitation multitâche) et les données auxquelles il est possible d'accéder dans l'état U2 dépendent de la commande d'utilisation restreinte.

Par exemple, si la commande d'utilisation restreinte précise que seule l'application A1 peut être exécutée en premier plan, sans accès aux données D1 (flèche 13), l'état U2 est un état U2A dans lequel le système d'exploitation OS peut uniquement commander l'exécution en premier plan de l'application A1 et ne donne pas accès aux données D1. Dans l'état U2A, il n'est pas possible de déclencher l'exécution des applications A2 et A3. De plus, dans le cas où les applications A2 et A3 s'exécutent déjà en arrière-plan, il n'est pas possible de les faire passer au premier plan. De plus, les applications A2 et A3 ne réagissent pas à des nouvelles commandes. Par exemple, l'application A3 de paiement sans contact s'exécute en arrière-plan et que le terminal 1 est placé à proximité d'un terminal de paiement sans contact qui lui envoie un message contenant une commande de validation d'un paiement, l'application A3 ne réagira pas.

L'état U2A est particulièrement intéressant lorsque le propriétaire du terminal 1 désire prêter son téléphone à une autre personne pour lui permettre uniquement de passer un appel.

Selon un autre exemple, si la commande d'utilisation restreinte précise que seule les applications A2 et A3 peuvent être exécutées en premier plan, sans accès aux données D2 et D3, (flèche 14), l'état U2 est un état U2B dans lequel le système d'exploitation peut uniquement commander l'exécution en premier plan de l'application A2 ou A3 et ne donne pas accès aux données D2 et D3. Dans l'état U2B, il n'est pas possible de déclencher l'exécution de l'application A1 ni de la faire passer au premier plan si elle s'exécute déjà en arrière-plan.

L'état U2B est particulièrement intéressant lorsque le propriétaire du terminal 1 désire prêter son téléphone à une autre personne pour lui permettre uniquement d'accéder à Internet.

Dans un deuxième mode de réalisation, l'état U2 permet uniquement l'exécution de manière interactive, successivement, d'un nombre N d'applications. Le nombre N est précisé par la commande d'utilisation restreinte.

Dans les deux modes de réalisations précités, une condition d'accès pour le mode d'utilisation restreinte est déterminée par la commande d'utilisation restreinte. Dans le premier mode de réalisation, la condition d'accès définit les applications et les données qu'il est possible d'exécuter en premier plan. Dans le deuxième mode de réalisation, la condition d'accès définit un nombre d'exécutions successives autorisées d'applications en premier plan. Ainsi, grâce à une commande d'utilisation restreinte, il est possible de limiter l'utilisation du terminal 1. De plus, il n'est pas nécessaire de définir préalablement les droits d'accès lors de l'utilisation restreinte. Au contraire, dans le premier mode de réalisation, les applications et les données accessibles sont définies à la demande, lors de l'introduction de la commande d'utilisation restreinte. Dans le deuxième mode de réalisation, le nombre N est défini à la demande, lors de l'introduction de la commande d'utilisation restreinte. Le terminal 1 convient donc particulièrement à une situation de prêt courte et exceptionnelle.

Dans une variante, la commande d'utilisation restreinte est introduite en deux étapes :
- Premièrement, dans l'état U1, l'utilisateur commande l'affichage d'une liste d'applications. Il peut s'agir par exemple d'un menu de démarrage permettant à l'utilisateur de commander, en réponse à une commande CMD1, l'exécution d'une application sélectionnée. Il peut s'agir également d'une liste d'applications en cours d'exécution permettant à l'utilisateur de commander, en réponse à une commande CMD2, l'exécution en premier plan d'une application sélectionnée.
- Ensuite, l'utilisateur sélectionne une application dans la liste affichée et introduit une commande CMD3 différente des commandes CMD1 et CMD2 précitées. Il peut s'agir par exemple d'actionner un bouton matériel de l'interface utilisateur 5, de sélectionner un bouton logiciel par l'intermédiaire de l'interface utilisateur 5, d'une commande tactile sur un écran tactile de l'interface utilisateur 5,... Dans une variante, la commande CMD3 comprend l'introduction du code d'identification de l'utilisateur.

En réponse à la commande CMD3, le système d'exploitation OS passe dans l'état U2 d'utilisation restreinte, dans lequel il permet uniquement l'exécution (ou l'exécution en premier plan) de l'application sélectionnée.

Dans une autre variante, la commande d'utilisation restreinte est introduite de la manière suivante :
- Premièrement, dans l'état U1, l'utilisateur commande l'exécution d'une application. L'interface de cette application comprend un élément de déclenchement de l'utilisation restreinte, par exemple un icone sélectionnable, un bouton logiciel, un élément de menu,...
- En actionnant cet élément, l'application en cours d'exécution transmet au système d'exploitation OS une demande de passer dans l'état U2 d'utilisation restreinte, en autorisant uniquement l'accès à elle-même.

Selon une autre variante, l'utilisateur commande l'affichage d'un menu de sélection. La **figure 3** représente un exemple de menu de sélection qui comprend une liste d'applications et, pour chaque application, un élément de sélection de l'accès à l'application (dans cet exemple une case à cocher) et un élément de sélection de l'accès aux données associées à l'application (dans cet exemple un interrupteur OUI/NON). Après avoir précisé les applications et les données auxquelles il souhaite donner accès en manipulant les éléments de sélection, l'utilisateur introduit une commande particulière (par exemple il appuie sur un bouton de validation).

Dans une autre variante correspondant au deuxième mode de réalisation précité, l'utilisateur lance une première application AR1 qui transmet au système d'exploitation OS une demande de passer dans l'état U2 lors du lancement des N applications suivantes A2, A3,..., exécutées juste après AR1. N (le nombre d'applications exploitables de façon interactive) est défini lors du lancement de l'application AR1 par l'une des méthodes suivantes (non limitative) :
- lorsque AR1 est lancée, l'interface demande le nombre d'applications qu'il sera possible d'exécuter. L'utilisateur entre ce nombre à l'aide de l'interface utilisateur.
- la demande d'exécution de AR1 est multiple sans demander le lancement d'autres applications entre les 2 exécutions de AR1. Par exemple si l'utilisateur exécute 3 fois AR1 de suite sans demander le lancement d'autre application, alors il permet aux 3 applications suivantes d'être utilisées dans l'état U2.

Ces commandes sont particulièrement simples et rapides à introduire. La commutation dans l'état U2 d'utilisation restreinte ne nécessite donc pas de manipulation complexe.

Dans le cas précité où la commande d'utilisation restreinte est déclenchée, dans l'état U1, à partir d'une application en cours d'exécution, l'application peut se trouver dans un état dans lequel elle effectue une opération pour l'utilisateur. Par exemple, l'application peut être connectée à un compte de l'utilisateur en utilisant des données de connexion et télécharger des données sur ce compte. Ainsi, dans un mode de réalisation, en réponse à la commande d'utilisation restreinte, le système d'exploitation OS mémorise l'état de l'application, puis réinitialise l'application lors du passage à l'état U2. La personne à qui le terminal 1 est prêté n'a donc pas accès au compte de l'utilisateur. Lors du passage ultérieur à l'état U1, l'état de l'application peut être restauré en utilisant l'état mémorisé.

Dans une variante, la commande d'utilisation restreinte comprend, outre l'indication de droits d'accès pour les applications et les données, une limite d'utilisation d'une application sélectionnée. Dans l'état U2 d'utilisation restreinte, le système d'exploitation OS est configuré pour commander l'exécution de l'application conformément à la limite spécifiée. Il peut s'agir par exemple d'une limite de temps ou d'une limite de nombre d'opération. Cela permet par exemple, lors du prêt d'un téléphone à une personne désirant passer un appel, de limiter la durée de l'appel téléphonique ou le nombre d'appels différents.

Dans l'état U2, en réponse à une commande d'utilisation normale, le système d'exploitation OS repasse dans l'état U1 d'utilisation normale (flèche 15). La commande d'utilisation normale comprend l'introduction du code d'identification de l'utilisateur (par exemple un code mémorisé dans la mémoire du microcircuit sécurisé (carte SIM par exemple) ou de la mémoire du téléphone). Ainsi, la personne à qui le terminal 1 a été prêté dans l'état U2 ne peut pas repasser dans l'état U1 et accéder à toutes les applications et données.

Dans une variante, dans l'état U2, en réponse à une commande de passage en mode veille, le système d'exploitation OS passe dans l'état V1 de veille verrouillé (flèche 16). Comme dans le cas de la flèche 11, la commande de passage en mode veille peut par exemple être introduite par l'utilisateur (bouton de l'interface utilisateur 5) ou générée par un minuteur.

Dans une autre variante, le système d'exploitation OS présente un état V2 de veille non verrouillée. Ainsi, dans l'état U2, en réponse à une commande de passage en mode veille, le système d'exploitation OS passe dans l'état V2 de veille NON verrouillée (flèche 17). A partir de l'état V2, il est possible de repasser à l'état U2 (flèche 18) sans nécessiter le code d'identification.

Les deux variantes précitées peuvent être combinées. Autrement dit, dans ce cas, à partir de l'état U2, le système d'exploitation OS peut passer dans l'état V1 en réponse à une première commande de passage en mode veille ou dans l'état V2 en réponse à une deuxième commande de passage en mode veille, différente de la première.

## Revendications

1. Terminal (1) informatique portable comprenant
un système d'exploitation (OS) configuré pour commuter d'un premier état (U1) vers un deuxième état (U2) en réponse à une première commande (13, 14) d'un utilisateur et pour commuter du deuxième état (U2) vers le premier état (U1) en réponse à une deuxième commande (15) de l'utilisateur, la deuxième commande (15) incluant l'introduction d'un code d'identification (PIN) de l'utilisateur,
le système d'exploitation (OS) étant capable, dans le premier état (U1), de commander l'exécution de manière interactive d'une application (A1, A2, A3) sélectionnée dans un ensemble d'applications,
le système d'exploitation (OS) étant capable, dans le deuxième état (U2), de commander l'exécution de manière interactive d'une application (A1, A2, A3) dudit ensemble d'applications conformément à une condition d'accès,
ladite condition d'accès étant déterminée en fonction de ladite première commande (13, 14),
ladite condition d'accès définissant un sous-ensemble dudit ensemble d'applications dont le système d'exploitation peut commander l'exécution de manière interactive dans le deuxième état (U2),
**caractérisé en ce que** dans le deuxième état, le système d'exploitation est apte à commander l'exécution de manière non-interactive d'une application n'appartenant pas audit sous-ensemble dudit ensemble d'applications.

2. Terminal (1) selon la revendication 1, dans lequel ladite première commande (13, 14) comprend une commande d'affichage d'une liste d'applications, et une commande de sélection d'au moins une application dans ladite liste, ledit sous-ensemble comprenant ladite au moins une application sélectionnée.

3. Terminal (1) selon la revendication 1, dans lequel ladite première commande (13, 14) comprend une commande d'exécution d'une application, l'exécution de l'application comprenant la transmission, vers le système d'exploitation, d'une demande de passage dans le deuxième état (U2) en réponse à l'actionnement d'un élément prédéterminé de l'application, ledit sous-ensemble comprenant ladite application.

4. Terminal (1) selon l'une des revendications 1 à 3, dans lequel le code d'identification comprend un code PIN, une lecture biométrique ou un code tactile.

5. Terminal (1) selon l'une des revendications 1 à 4, dans lequel, dans le premier état (U1), l'application exécutée de manière interactive a accès à un ensemble de données (D1, D2, D3) et, dans le deuxième état, l'application exécutée de manière interactive a accès à un sous-ensemble de l'ensemble de données (D1, D2, D3), ledit sous-ensemble de l'ensemble de données étant déterminé en fonction de la première commande (13, 14).

6. Terminal (1) selon l'une des revendications 1 à 5, dans lequel ladite première commande comprend une limite d'utilisation, le système d'exploitation (OS) étant configuré pour exécuter de manière interactive, dans le deuxième état (U2), l'application sélectionnée conformément à ladite limite d'utilisation.

7. Terminal (1) selon l'une des revendications 1 à 6, dans lequel, en réponse à une commande de passage en mode veille, le système d'exploitation (OS) est configuré pour commuter du premier état (U1) vers un état (V1) de veille verrouillée ou du deuxième état (U2) vers un état (V2) de veille non verrouillée, la commutation de l'état (V1) de veille verrouillée vers le premier état (U1) nécessitant l'introduction du code d'identification (PIN) de l'utilisateur.

8. Procédé de fonctionnement d'un système d'exploitation (OS) d'un terminal (1) informatique portable, comprenant
- dans un premier état (U1), une étape de commande de l'exécution de manière interactive d'une application (A1, A2, A3) sélectionnée dans un ensemble d'applications,
- une étape de commutation du premier état (U1) vers un deuxième état (U2) en réponse à une première commande (13, 14) d'un utilisateur,
- dans le deuxième état (U2), une étape de commande de l'exécution de manière interactive d'une application (A1, A2, A3) dudit ensemble d'applications conformément à une condition d'accès,
- une étape de commutation du deuxième état (U2) vers le premier état (U1) en réponse à une deuxième commande (15) de l'utilisateur, la deuxième commande (15) incluant l'introduction d'un code d'identification (PIN) de l'utilisateur,
ladite condition d'accès étant déterminée en fonction de ladite première commande (13, 14),
ladite condition d'accès définissant un sous-ensemble dudit ensemble d'applications dont le système d'exploitation peut commander l'exécution de manière interactive dans le deuxième état (U2),
**caractérisé en ce que** dans le deuxième état, le système d'exploitation est apte à commander l'exécution de manière non-interactive d'une application n'appartenant pas audit sous-ensemble dudit ensemble d'applications.

9. Procédé selon la revendication 8, dans lequel, dans le deuxième état, le système d'exploitation commande l'exécution de manière interactive d'une application choisie parmi : un navigateur Internet, une application d'appel téléphonique.

10. Procédé selon l'une des revendications 8 et 9, dans lequel, dans le deuxième état, le système d'exploitation commande l'exécution de manière non-interactive d'une application choisie parmi : une application dont l'exécution implique une communication courte distance ou NFC, une application bancaire, une application de titre de transport.

## Patentansprüche

1. Tragbares informationstechnisches Endgerät (1), umfassend
ein Betriebssystem (OS), das dazu ausgestaltet ist, als Reaktion auf einen ersten Befehl (13, 14) eines Nutzers von einem ersten Zustand (U1) zu einem zweiten Zustand (U2) umzuschalten und als Reaktion auf einen zweiten Befehl (15) des Nutzers von dem zweiten Zustand (U2) zu dem ersten Zustand (U1) umzuschalten, wobei der zweite Befehl (15) das Eingeben eines Identifikationscodes (PIN) des Nutzers beinhaltet,
wobei das Betriebssystem (OS) in dem ersten Zustand (U1) in der Lage ist, die interaktive Ausführung einer Anwendung (A1, A2, A3) zu steuern, die aus einer Menge von Anwendungen ausgewählt ist,
wobei das Betriebssystem (OS) in dem zweiten Zustand (U2) in der Lage ist, die interaktive Ausführung einer Anwendung (A1, A2, A3) der Menge von Anwendungen gemäß einer Zugriffsbedingung zu steuern,
wobei die Zugriffsbedingung in Abhängigkeit von dem ersten Befehl (13, 14) bestimmt wird,
wobei die Zugriffsbedingung eine Teilmenge der Menge von Anwendungen definiert, deren interaktive Ausführung das Betriebssystem in dem zweiten Zustand (U2) steuern kann,
**dadurch gekennzeichnet, dass** das Betriebssystem in dem zweiten Zustand geeignet ist, die nicht-interaktive Ausführung einer Anwendung zu steuern, die der Teilmenge der Menge von Anwendungen nicht angehört.

2. Endgerät (1) nach Anspruch 1, wobei der erste Befehl (13, 14) einen Befehl zum Anzeigen einer Liste von Anwendungen und einen Befehl zum Auswählen mindestens einer Anwendung aus der Liste umfasst, wobei die Teilmenge die mindestens eine ausgewählte Anwendung umfasst.

3. Endgerät (1) nach Anspruch 1, wobei der erste Befehl (13, 14) einen Befehl zur Ausführung einer Anwendung umfasst, wobei die Ausführung der Anwendung die Übertragung einer Anforderung des Wechselns in den zweiten Zustand (U2) als Reaktion auf die Betätigung eines vorbestimmten Elements der Anwendung zu dem Betriebssystem umfasst, wobei die Teilmenge die Anwendung umfasst.

4. Endgerät (1) nach einem der Ansprüche 1 bis 3, wobei der Identifikationscode einen PIN-Code, einen biometrischen Scan oder einen taktilen Code umfasst.

5. Endgerät (1) nach einem der Ansprüche 1 bis 4, wobei die interaktiv ausgeführte Anwendung in dem ersten Zustand (U1) Zugriff auf eine Menge von Daten (D1, D2, D3) hat und die interaktiv ausgeführte Anwendung in dem zweiten Zustand Zugriff auf eine Teilmenge der Menge von Daten (D1, D2, D3) hat, wobei die Teilmenge der Menge von Daten in Abhängigkeit von dem ersten Befehl (13, 14) bestimmt wird.

6. Endgerät (1) nach einem der Ansprüche 1 bis 5, wobei der erste Befehl eine Nutzungsgrenze umfasst, wobei das Betriebssystem (OS) dazu ausgestaltet ist, die ausgewählte Anwendung in dem zweiten Zustand (U2) gemäß der Nutzungsgrenze interaktiv auszuführen.

7. Endgerät (1) nach einem der Ansprüche 1 bis 6, wobei das Betriebssystem (OS) dazu ausgestaltet ist, als Reaktion auf einen Befehl zum Wechseln in den Standby-Modus von dem ersten Zustand (U2) zu einem gesperrten Standby-Zustand (V1) oder von dem zweiten Zustand (U2) zu einem nicht gesperrten Standby-Zustand (V2) umzuschalten, wobei das Umschalten von dem gesperrten Standby-Zustand (V1) zu dem ersten Zustand (U1) das Eingeben des Identifikationscodes (PIN) des Nutzers erfordert.

8. Betriebsverfahren für ein Betriebssystem (OS) eines tragbaren informationstechnischen Endgeräts (1), umfassend
- in einem ersten Zustand (U1) einen Schritt des Steuerns der interaktiven Ausführung einer Anwendung (A1, A2, A3), die aus einer Menge von Anwendungen ausgewählt ist,
- einen Schritt des Umschaltens von dem ersten Zustand (U1) zu einem zweiten Zustand (U2) als Reaktion auf einen ersten Befehl (13, 14) eines Nutzers,
- in dem zweiten Zustand (U2) einen Schritt des Steuerns der interaktiven Ausführung einer Anwendung (A1, A2, A3) der Menge von Anwendungen gemäß einer Zugriffsbedingung,
- einen Schritt des Umschaltens von dem zweiten Zustand (U2) zu dem ersten Zustand (U1) als Reaktion auf einen zweiten Befehl (15) des Nutzers, wobei der zweite Befehl (15) das Eingeben eines Identifikationscodes (PIN) des Nutzers beinhaltet,
wobei die Zugriffsbedingung in Abhängigkeit von dem ersten Befehl (13, 14) bestimmt wird,
wobei die Zugriffsbedingung eine Teilmenge der Menge von Anwendungen definiert, deren interaktive Ausführung das Betriebssystem in dem zweiten Zustand (U2) steuern kann,
**dadurch gekennzeichnet, dass** das Betriebssystem in dem zweiten Zustand geeignet ist, die nicht-interaktive Ausführung einer Anwendung zu steuern, die der Teilmenge der Menge von Anwendungen nicht angehört.

9. Verfahren nach Anspruch 8, wobei das Betriebssystem in dem zweiten Zustand die interaktive Ausführung einer Anwendung steuert, die gewählt ist unter: einem Webbrowser, einer Telefonie-Anwendung.

10. Verfahren nach einem der Ansprüche 8 und 9, wobei das Betriebssystem in dem zweiten Zustand die nicht-interaktive Ausführung einer Anwendung steuert, die gewählt ist unter: einer Anwendung, deren Ausführung eine Nahfeldkommunikation oder NFC beinhaltet, einer Bankanwendung, eine Fahrscheinanwendung.

## Claims

1. A portable computer terminal (1) comprising an operating system (OS) configured to switch from a first state (U1) to a second state (U2) in response to a first command (13, 14) from a user and to switch from the second state (U2) to the first state (U1) in response to a second command (15) from the user, the second command (15) including the introduction of an identification code (PIN) of the user,
the operating system (OS) being capable, in the first state (U1), of commanding the interactive execution of an application (A1, A2, A3) selected from a set of applications,
the operating system (OS) being capable, in the second state (U2), of commanding the interactive execution of an application (A1, A2, A3) from said set of applications according to an access condition,
said access condition being determined as a function of said first command (13, 14),
said access condition defining a subset of said set of applications whereof the operating system can command the interactive execution in the second state (U2),
**characterized in that** in the second state, the operating system is able to command the noninteractive execution of an application not belonging to said subset of said set of applications.

2. The terminal (1) according to claim 1, wherein said first command (13, 14) comprises a command for displaying a list of applications, and a command for selecting at least one application from said list, said subset comprising said at least one selected application.

3. The terminal (1) according to claim 1, wherein said first command (13, 14) comprises a command for executing an application, the execution of the application comprising the transmission, to the operating system, of a request to enter the second state (U2) in response to the actuation of a predetermined element of the application, said subset comprising said application.

4. The terminal according to one of claims 1 to 3, wherein the identification code comprises a PIN code, a biometric reading or a tactile code.

5. The terminal (1) according to one of claims 1 to 4, wherein, in the first state (U1), the application executed interactively has access to a data set (D1, D2, D3) and, in the second state, the application executed interactively has access to a subset of the data set (D1, D2, D3), said subset of the data set being determined as a function of the first command (13, 14).

6. The terminal according to one of claims 1 to 5, wherein said first command comprises a usage limit, the operating system (OS) being configured to execute interactively, in the second state (U2), the selected application according to said usage limit.

7. The terminal (1) according to one of claims 1 to 6, wherein, in response to a command to enter standby mode, the operating system (OS) is configured to switch from the first state (U1) to a locked standby state (V1) or from the second state (U2) to an unlocked standby state (V2), the switching from the locked standby state (V1) to the first state (U1) requiring the introduction of the identification code (PIN) of the user.

8. An operating method of an operating system (OS) of a portable computer terminal (1), comprising:
- in a first state (U1), a step for controlling the interactive execution of an application (A1, A2, A3) selected from a set of applications,
- a step for switching from the first state (U1) to a second state (U2) in response to a first command (13, 14) from a user,
- in the second state (U2), a step for commanding the interactive execution of an application (A1, A2, A3) of said set of applications according to an access condition,
- a step for switching from the second state (U2) to the first state (U1) in response to a second command (15) from the user, the second command (15) including the introduction of an identification code (PIN) of the user, said access condition being determined as a function of said first command (13, 14),
said access condition defining a subset of said set of applications whereof the operating system can command the interactive execution in the second state (U2),
**characterized in that** in the second state, the operating system is able to command the noninteractive execution of an application not belonging to said subset of said set of applications.

9. The method according to claim 8, wherein, in the second state, the operating system commands the interactive execution of an application chosen from: an Internet browser, a telephone call application.

10. The method according to one of claims 8 and 9, wherein, in the second state, the operating system commands the noninteractive execution of an application chosen from: an application whose execution involves a short distance or NFC communication, a banking application, a travel ticket application.
